# EUROPÄISCHE PATENTSCHRIFT

(11) **EP 2 379 657 B1**
(45) Veröffentlichungstag und Bekanntmachung des Hinweises auf die Patenterteilung: **10.05.2017**
(21) Anmeldenummer: 09803766.6
(22) Anmeldetag: 23.12.2009
(51) Int. Cl.: C09D 183/04, C23C 18/12

(54) **ALKALIBESTÄNDIGE, ABRIEBFESTE UND SPÜLMASCHINENFESTE BESCHICHTUNG AUF EINEM SUBSTRAT**
ALKALI-RESISTANCE, WEAR-RESISTANT AND DISHWASHER-SAFE COATING ON A SUBSTRATE
REVÊTEMENT DE SUBSTRAT RÉSISTANT AUX ALCALIS, RÉSISTANT À L'USURE ET RÉSISTANT AU LAVE-VAISSELLE

(30) Priorität: 24.12.2008 DE 102008063160
(43) Veröffentlichungstag der Anmeldung: 26.10.2011
(73) Patentinhaber: EPG (Engineered nanoProducts Germany) AG, 64347 Griesheim (DE)
(72) Erfinder: ARPAC, Ertugrul, 07058 Antalya (TR); BURUNKAYA, Esin, 07058 Antalya (TR); KIRAZ, Nadir, 07058 Antalya (TR); SCHMIDT, Carsten, 66119 Saarbrücken (DE); SCHMIDT, Helmut, 66130 Saarbrücken-Güdingen (DE)
(74) Vertreter: Held, Stephan
(86) Internationale Anmeldenummer: PCT/EP2009/067859
(87) Internationale Veröffentlichungsnummer: WO 2010/072814

(56) Entgegenhaltungen:
- WO-A1-2006/112230
- WO-A1-2008/049846
- US-A1- 2001 032 568

## Beschreibung

Die vorliegende Erfindung betrifft ein Verfahren zur Herstellung einer Schutzschicht aus einer Grundschicht und einer Deckschicht auf einem Substrat und das mit der chemisch resistenten, insbesondere alkaliresistenten Schutzschicht versehene Substrat..

Metallisches Aluminium und dessen Legierungen sind ein viel benutzter Werkstoff in der Industrie, in der Praxis und im Consumer-Bereich. Dies wird ausschließlich dadurch ermöglicht, dass trotz des unedlen Charakters des Metalls durch seine Fähigkeit zur Oberflächenpassivierung eine relativ hohe Beständigkeit unter Umgebungsbedingungen auftritt. Dabei bildet sich eine Oxidschicht, die so dicht ist, dass sie einem korrosiven Angriff durch Feuchtigkeit standhält. Treten jedoch Bedingungen auf, die die Oxidschicht angreifen, so wird die Passivierung aufgehoben und die Korrosion schreitet schnell voran. Dies gilt für alle saure und basische Angriffe, d.h. bei einem pH oberhalb oder unterhalb pH 7. Grund ist der amphotere Charakter von Aluminiumoxid, der die Löslichkeit sowohl in Säuren als auch in Basen bewirkt

Zum Schutz von Aluminiumoberflächen, insbesondere in Verbindung mit dekorativen Effekten oder für korrosiv belastete Anwendungen, z.B. im Außenbereich, ist die anodische Oxidation seit langem bekannt Eines der gängigen, unter dem Markennamen "Eloxal" bekannten Verfahren ist in Industrie und Praxis weit verbreitet. Dabei wird mit Hilfe eines elektrischen Potentials eine Oxidschicht relativ rasch erzeugt, in die nach Bedarf Pigmente eingelagert und Farbeffekte erzeugt werden können Die Struktur dieser Oxidschicht ist aber nicht kompakt, sondern eher porös, so dass sie zum Beispiel einem alkalischen Angriff eine große Oberfläche bietet. Deswegen sind diese anodischen Schichten gegenüber Basen sehr empfindlich. Daher werden sie z.B. bei pH-Werten, wie sie z B auch in einer Spülmaschine herrschen, mehr oder weniger rasch angegriffen oder aufgelöst oder sie bleichen aus.

Da insbesondere die über die anodische Oxidation hergestellten Oberflächeneffekte für dekorative Effekte eine hohe Bedeutung haben, ist die Herstellung von spülmaschinenfesten, dekorativen Schichten z.B auf Aluminiumoberflächen, wie sie z.B. für Haushaltsgeräte erforderlich sind, von hoher Bedeutung.

In der Literatur sind Sol-Gel-Verfahren beschrieben, bei denen hydrolytisch stabile Oxide in flüssiger Form auf eine Oberfläche aufgetragen und anschließend thermisch stabilisiert werden, z.B. durch Verdichtung oder Härtung.

Der Versuch, solche Verfahren zur Stabilisierung von anodischen Oxidschichten anzuwenden, hat sich jedoch als nicht praktikabel erwiesen, da es nicht gelingt, die den anodischen Schichten innewohnende Porosität vollständig zu schließen Daher ist es nicht möglich, die Penetration eines alkalischen Milieus in die Schicht und an die Grenzfläche zum Aluminium zu verhindern Es hat sich darüber hinaus erwiesen, dass sich bei Erhitzen solcher Systeme zur Stabilisierung auf Temperaturen über 200°C Schrumpfungseffekte in der porösen Schicht ergeben, die Rissbildung zur Folge haben Dadurch wird die chemische Beständigkeit noch weiter reduziert. Die für diese Systeme eingesetzten Oxide waren Titanoxid oder Zirconiumoxid, beides Oxide die für ihre hohe alkalische Beständigkeit bekannt sind

WO 2008/049846 betrifft eine alkaliresistente Beschichtung auf Leichtmetalloberflächen und ein Verfahren zu deren Herstellung. Darin wird ein Gegenstand umfassend eine Oberfläche von Leichtmetall, die mit einer alkalibeständigen Schutzschicht versehen ist, beschrieben, wobei die Schutzschicht a) eine Oxidschicht von Silicium und Bor als Grundschicht und b) eine Oxidschicht von Silicium, die gegebenenfalls Farbpigmente umfasst, als glasartige Deckschicht umfasst.

Durch die Silicium-Bor-Grundschicht konnten bei den in WO 2008/049846 beschriebenen Systemen weitgehend rissfreie Beschichtungen erzielt werden. Allerdings besteht bei der Güte der Beschichtung hinsichtlich Rissfreiheit und auch bei der Reproduzierbarkeit noch Verbesserungsbedarf. Hinzu kommt, dass die Sole der Si-B-Grundschicht sehr schnell gelieren, d.h schnell verbraucht werden müssen. Im Hinblick auf eine industrielle Produktion, bei der Lagerung und Herstellung größere Mengen des Sols sichergestellt werden müssen, ist dies ungünstig. Die Lewissäure Bor katalysiert die Vernetzung zu gut Dies gilt im noch größeren Maßstab für Titan.

Zur Verzögerung des Hartwerdens müssen diese Systeme hoch verdünnt werden oder der Gehalt an B und gegebenenfalls Ti muss sehr stark reduziert werden, so dass der Gehalt chemisch nicht mehr relevant ist. Es besteht daher Bedarf nach einem wirtschaftlicheren Verfahren zur Herstellung.

US 2001/0032568 A1 beschreibt wässrige Beschichtungszusammensetzungen, die durch Mischen von hydrolysierbaren Silanen mit einem nicht hydrolysierbaren organischen Rest, einer Säurekomponente ausgewählt aus der Gruppe bestehend aus organischen Säuren, H₃BO₃ und H₃PO₃ sowie Wasser gebildet werden. In einigen Beispielen werden als Polydiethoxysiloxan bezeichnete Hydrolyseprodukte von Tetraethylsilicat als zusätzliche Komponente verwendet.

WO 2006/112230 betrifft Beschichtungszusammensetzungen, die ein Hydrolyse- und Kondensationsprodukt von einer Silanverbindung und einer Alkalimetallverbindung umfassen. Mit den Zusammensetzungen sollen Silica-Schichten mit niedriger Dielektrizitätskonstante, guten elektrischen Eigenschaften und gleichmäßiger Dicke gebildet werden können.

Die Aufgabe der vorliegenden Erfindung bestand in der Entwicklung einer spülmaschinenfesten und alkalibeständigen Beschichtung für Substrate, die einfach herzustellen ist, eine möglichst einfache Prozessierbarkeit ermöglicht und darüber hinaus möglichst rissfrei ist. Die Beschichtung soll insbesondere als Schutzschicht für ein Leichtmetall als Substrat geeignet sein, womit einerseits anodisch oxidierte Oberflächen stabilisiert werden können, sie andererseits aber auch für den Auftrag auf Leichtmetallsubstraten, wie z.B. Aluminiumoberflächen ohne vorherige anodische Oxidation geeignet sind. Ein weiteres Ziel ist die Herstellung einer transparenten Schutzschicht.

Diese Aufgabe konnte überraschenderweise gelöst werden durch eine Doppelschicht auf einem Substrat, das eine mit einer Flexibilisierungskomponente wie zum Beispiel PDMS (Polymethyldisiloxan) oder ähnlich wirkenden Komponenten mit Molekulargewichten, die noch eine Löslichkeit in alkoholischen Lösungsmitteln, wie zum Beispiel Isopropanol zulassen, flexibilisierte Grundschicht und einer Alkalimetallhaltigen Deckschicht aufweist. Durch den bevorzugten Einsatz von basischen Alkalimetallverbindungen der "schweren" Alkalimetalle, d.h. K, Rb oder Cs, in der Beschichtungszusammensetzung für die Deckschicht konnte zusätzlich der überraschende Effekt einer hohen Alkalibeständigkeit erreicht werden, was im Gegensatz zur herrschenden Lehre steht.

Es ist aus der einschlägigen Glasliteratur bekannt, dass die chemische Beständigkeit (hydrolytische Beständigkeit) von Gläsern mit einem konstanten molaren Anteil von Alkalimetall mit Zunahme des lonenradius des jeweiligen Alkalimetalls abnimmt. Vor diesem Hintergrund sind zum Beispiel Natriumsilikatgläser chemisch beständiger als Kaliumsilikatgläser mit gleichem molekularem Alkalianteil. Chemisch noch unbeständiger sind Cäsium-haltige Gläser. Es wurde nun überraschend gefunden, dass bei Zusammensetzungen mit sehr hohem SiO₂-Anteil, besonders dann, wenn er über 90% beträgt, sich das bei geschmolzenen Silikatgläsern zeigende Verhalten, mit zunehmendem lonenradius des Alkaliatoms chemisch unbeständiger zu werden, ins Gegenteil umgekehrt. Erklärt werden könnte dies, ohne detaillierten Mikrostrukturanalysen vorzugreifen, damit, dass in der Mikroumgebung des Alkalimetallatoms eine lokale Netzwerkauflockerung auftritt, die zu einer besser verdichteten Struktur führt, so dass, bedingt durch den insgesamt sehr hohen SiO₂-Gehalf eine Überkompensation des lenenradius-Effekts eintritt Die aufgetragenen Grund- und Deckschichten können darüber hinaus durch ein thermisches Ausheizprogramm in dichte Schichten überführt werden, auch wenn die Verdichtung unterhalb der Tg der zu verdichtenden Schicht erfolgt.

Dementsprechend betrifft die Erfindung ein Verfahren zur Herstellung einer Schutzschicht aus Grundschicht und Deckschicht auf einem Substrat, bei dem a) eine Beschichtungszusammensetzung, umfassend eine Bindemittelkomponente aus einem Hydrolysat oder Kondensat von einer oder mehreren hydrolysierbaren Siliciumverbindungen, wobei mindestens eine hydrolysierbare Siliciumverbindung mindestens eine nicht hydrolysierbare organische Gruppe aufweist, und einer Flexibilisierungskomponente aus mindestens einem linearen anorganischen Polymer nasschemisch auf das Substrat aufgebracht und verdichtet wird, um die Grundschicht zu bilden, und b) eine Beschichtungszusammensetzung, die mindestens eine basische Alkalimetallverbindung und ein Hydrolysat oder Kondensat von einer oder mehreren hydrolysierbaren Siliciumverbindungen, wobei mindestens eine hydrolysierbare Siliciumverbindung mindestens eine nicht hydrolysierbare organische Gruppe aufweist, umfasst, nasschemisch auf die Grundschicht aufgebracht und verdichtet wird, um die Deckschicht zu bilden. Die Beschichtungszusammensetzung für die Deckschicht umfasst dabei bevorzugt mindestens eine basische Alkalimetallverbindung ausgewählt aus einer Kalium-, Rubidium- oder Cäsiumverbindung. Die aufgetragene Grundschicht und die aufgetragene Deckschicht werden insbesondere thermisch verdichtet, bevorzugt bei einer Temperatur unterhalb der Tg der zu verdichtenden Schicht

Durch das erfindungsgemäße Verfahren konnten alkaliresistente Schutzschichten erhalten werden, die eine außerordentlich gute Rissfreiheit zeigten, so dass die Schutzschichten einen ausgezeichneten Schutz gegen Angriff durch alkalische Medien bieten Die Schutzschichten sind zudem spülmaschinenfest und zeigen eine überraschend hohe Abriebfestigkeit. Da die Doppelschicht durch nasschemische Verfahren aufgebracht wird, ist die Herstellung der Schutzschicht einfach und preiswert. Es können transparente Schutzschichten erhalten werden. Das Verfahren eignet sich insbesondere, wenn Leichtmetalloberflächen als Substrate eingesetzt werden, selbst wenn es sich um poröse Oberflächenschichten der Leichtmetalle handelt.

Überdies ist sowohl für die Grundschicht als auch für die Deckschicht kein Zusatz von katalytisch aktivem Bor oder katalytisch aktiven Metallen, wie Ti, Al oder Zr, erforderlich, so dass ein frühzeitiges Gelieren vermieden werden kann und damit eine z.B. gegenüber den Si-B-Systemen aus der WO 2008/049846 deutlich verbesserte Topfbeständigkeit erreicht wird. Dadurch ist die Prozessierung unkomplizierter, was insbesondere bei industriellen Verfahrensabläufen von Vorteil ist.. Ausreichende Topfzeiten sind für die industrielle Massenproduktion Voraussetzung.. Im folgenden wird die Erfindung im einzelnen erläutert.

Das Substrat kann insbesondere die Oberfläche eines Gegenstandes, wie von Halbzeugen und Fertigprodukten oder Bauteilen davon, oder der Teil einer Oberfläche eines Gegenstandes sein Selbstverständlich kann ein Teil mit der Substratoberfläche zuerst mit der erfindungsgemäßen Schutzschicht versehen werden und erst anschließend mit restlichen Komponenten zu dem Gegenstand zusammengebaut werden.

Das Substrat oder der mit dem Substrat versehene Gegenstand kann verschiedene Geometrien aufweisen. Ein Vorteil der Erfindung besteht darin, dass auch Gegenstände mit komplexeren Geometrien ohne weiteres mit der Schutzschicht versehen werden können Es kann auch nur ein Teil der Oberfläche von einem Gegenstand mit der Schutzschicht versehen werden. So besteht zum Beispiel die Möglichkeit, nur das Innere von Töpfen oder Röhren zu beschichten Ein weiterer Vorteil besteht darin, dass die Bildung dünner Filme von wenigen Mikrometern sowohl für die Grundschicht als auch die Deckschicht mittels Auftrag durch Spraycoating möglich ist

Als Substrat kommen alle geeigneten Materialien in Betracht, z.B. Metall, Glas, Glaskeramik oder Keramik Bevorzugt als Substrate sind Metall und insbesondere Leichtmetall Metall und Leichtmetalle schließen auch entsprechende Legierungen ein

Beispiele für Glas sind Natronkalkglas, Borosilicatglas, Bleikristall und Kieselglas Es kann sich z.B. um Flachglas, Hohlglas wie Behäfterglas, oder um Laborgeräteglas handeln Bei der Keramik handelt es sich z.B. um eine Keramik auf Basis der Oxide SiO₂, Al₂O₃, ZrO₂ oder MgO oder der entsprechenden Mischoxide..

Beispiele für metallische Substrate sind Zinn, Zink, Kupfer, Chrom, Nickel, verzinkte, verchromte oder emaillierte Oberflächen, Stahl, insbesondere Edelstahl, und Kupferlegierungen wie Messing und Bronze. Besonders bevorzugt sind Substrate aus Leichtmetalle. Ein Leichtmetall ist ein Metall mit einer Dichte von nicht mehr als 5 g/cm³ Unter Leichtmetall werden hier auch die Legierungen dieser Leichtmetalle verstanden. Bevorzugte Beispiele sind Aluminium, Magnesium und Titan und deren Legierungen, wobei Aluminium und Magnesium und deren Legierungen besonders bevorzugt sind.

Wegen des bereits oben erläuterten unedlen Charakters der Leichtmetalle weisen sie auf der Oberfläche häufig eine Oxidschicht auf oder sie sind oberflächenbehandelt, so dass sich auf der Oberfläche der Leichtmetalle häufig mindestens eine Schicht befindet, z.B. eine Oxidschicht oder eine andere Funktionsschicht, wie eine Passivierungsschicht oder Dekorschicht, wie Oxid-, Phosphat-, Chromat-, zink- oder nickel-haltige Schichten. Diese Schichten sind häufig mehr oder weniger porös, so dass eine weitere Beschichtung zu Schwierigkeiten führen kann. Gegebenenfalls können auch andere Beschichtungen vorhanden sein, das ist aber nicht bevorzugt. Die erfindungsgemäße Schutzschicht ist besonders geeignet, wenn auf dem Leichtmetall eine solche poröse Schicht vorhanden ist, da auch in diesem Fall eine rissfreie Schutzschicht aufgebracht werden muss

Besonders geeignet ist die Erfindung für Leichtmetalle, die eine Oxidschicht aufweisen, insbesondere eine poröse Oxidschicht Es können aber auch dichte oxidische Passivierungsschichten vorhanden sein, die in der Regel dünn sind Die Oxidschicht kann sich von selbst bilden, d.h. als "natürliche" Passivierung durch Oxidation mit dem Sauerstoff der Umgebung. Besonders bevorzugt weist das Leichtmetall, insbesondere Al oder eine Legierung davon, eine durch anodische Oxidation gebildete Oxidschicht (anodische Oxidschicht), die z.B. nach dem Eloxal^{®}-Verfahren gebildet wurde, auf. Solche anodischen Oxidschichten werden auch zur Erzielung von Oberflächeneffekten für dekorative Effekte eingesetzt und können dann z.B eingelagerte Pigmente enthalten.

Der mit der Schutzschicht zu versehene Gegenstand kann jeder beliebige Gegenstand sein, der eine Oberfläche aus dem Substrat aufweist. Es kann sich z B auch um die reinen Werkstoffe handeln, die z.B. als Platte oder Blech vorliegen, und als Rohmaterial für die Herstellung bestimmter Gegenstände dienen Es kann sich z B. um Gegenstände aus den Gebieten Industrie, Transport, Automobile, Milchindustrie, Pharmazie, Sport, täglicher Bedarf, Versorgung, Labor oder Medizin handeln. Konkrete Beispiele sind Rohre wie Leitungsrohre, Behälter, Fahrzeuge, medizinische Instrumente, Geräte oder Gehäuse oder Teile davon Besonders bevorzugt handelt es sich bei den Gegenständen um Haushaltsgegenstände oder Haushaltsgeräte, wie z.B. Geschirr, Besteck, Tabletts, Pfannen, Töpfe, Backformen, Kochutensilien, Kühlschränke, Backöfen, Eierkocher, Mikrowellengeräte, Wasserkocher, Grillroste, Dampfgare, Öfen, Arbeitsflächen, Armaturen im Küche und Bad, Gehäuse von (elektrischen) Haushaltsgeräten, Spülen, Lampen und Leuchten, insbesondere Besteck und Kochgeschirr, wie Pfannen oder Töpfe, oder Teile davon.. Besonders geeignet sind Gegenstände, die für die Reinigung in Spülmaschinen bestimmt sind

Weitere bevorzugte Anwendungsgebiete für die erfindungsgemäß zu beschichtenden Substrate sind korrosiv belastete Gegenstände mit Substratwerkstoffen aus Aluminium, Aluminiumlegierungen, Aluminium-Magnesium, Magnesium und Magnesiumlegierungen, alle Gegenstände im Außenbereich, wie z.B. Türen, Fenster oder Fassadenplatten, Chemikalienbehälter, Reaktoren, Leitungen, z.B. Leitungen, die mit Alkalien belastet sind, oder Leitungen, die mit Alkalien gereinigt werden (z.B. bei Prozessen, bei denen z.B. Milch oder Lebensmittel verarbeitet werden).

Weitere Beispiele für mit der Schutzschicht zu versehene Gegenstände sind Behälter für chemische Anlagen oder Teile davon, Magnesiumbauteile, Bauteile von Automobilen aus Al.

Das Substrat, insbesondere das Substrat aus Metall oder Leichtmetall, kann vor dem Auftrag der Beschichtungszusammensetzung gründlich gereinigt und insbesondere von Fett und Staub befreit werden. Vor der Beschichtung kann auch eine Oberflächenbehandlung, z.B. durch Corona-Entladung, durchgeführt werden Andere Behandlungen, wie eine Aktivierung, sind ebenfalls möglich

Das Substrat wird mit einem alkaliresistenten Schutzschichtsystem aus zwei Schichten, einer Grundschicht und einer darüber liegenden Deckschicht versehen.. Beide Schichten werden mit Hilfe eines nasschemischen Verfahrens aufgebracht, d h. die Beschichtungszusammensetzungen sind flüssig bzw gießfähig, z.B. in Form einer Lösung, Dispersion, Emulsion oder vorzugsweise eines Sols

Sowohl die Beschichtungszusammensetzung für die Grundschicht als auch die Beschichtungszusammensetzung für die Deckschicht umfassen als Bindemittelkomponente ein Hydrolysat oder Kondensat von einer oder mehreren hydrolysierbaren Siliciumverbindungen, wobei mindestens eine hydrolysierbare Siliciumverbindung mindestens eine nicht hydrolysierbare organische Gruppe aufweist..

Im folgenden wird dieses Hydrolysat oder Kondensat, insbesondere bezüglich Ausgangsmaterialien und dessen Bildung, näher erläutert Sofern nicht ausdrücklich anders angegeben, beziehen sich diese Angaben sowohl auf das Hydrolysat oder Kondensat, das in der Beschichtungszusammensetzung für die Grundschicht enthalten ist, als auch auf das Kondensat, das in der Beschichtungszusammensetzung für die Deckschicht enthalten ist.

Das Kondensat von einer oder mehreren hydrolysierbaren Siliciumverbindungen, wobei mindestens eine hydrolysierbare Siliciumverbindung mindestens eine nicht hydrolysierbare organische Gruppe aufweist, wird insbesondere durch Hydrolyse oder Kondensation der hydrolysierbaren Verbindungen erhalten, bevorzugt nach dem Sol-Gel-Verfahren.

Bei der Hydrolyse und/oder Kondensation, insbesondere nach dem Sol-Gel-Verfahren werden gewöhnlich hydrolysierbare Verbindungen mit Wasser, gegebenenfalls unter saurer oder basischer Katalyse, hydrolysiert und zumindest teilweise kondensiert. Die Hydrolyse- und/oder Kondensationsreaktionen führen zur Bildung von Verbindungen oder Kondensaten mit Hydroxy-, Oxogruppen und/oder Oxobrücken, die als Vorstufen für die zu bildende Oxidschicht dienen Es können stöchiometrische Wassermengen bezogen auf die Anzahl hydrolysierbarer Gruppen, aber auch geringere oder größere Mengen verwendet werden, bevorzugt sind etwa stöchiometrische Mengen Wasser zur Hydrolyse.

Das sich bildende Hydrolysat und Kondensat ist insbesondere ein Sol und kann durch geeignete Parameter, z.B. Kondensationsgrad, Lösungsmittel oder pH-Wert, auf die für die Beschichtungszusammensetzung gewünschte Viskosität eingestellt werden Weitere Einzelheiten des Sol-Gel-Verfahrens sind z B. bei C.J. Brinker, G.W. Scherer: "Sol-Gel Science - The Physics and Chemistry of Sol-Gel-Processing", Academic Press, Boston, San Diego, New York, Sydney (1990) beschieben.

Die Hydrolyse wird durch Zugabe von Wasser, gegebenenfalls in Anwesenheit eines Katalysators, z.B. einer Säure oder einer Base, eingeleitet. Die Reaktion kann durch Erwärmen unterstützt werden. Die Dauer der Reaktion kann in weiten Bereichen variieren und hängt z.B. von der Menge an Wasser, der Temperatur, der Art der Ausgangsverbindungen und gegebenenfalls der Katalysatoren ab. Die hydrolysierbaren Verbindungen können gemeinsam oder getrennt hydrolysiert werden und anschließend vereinigt werden. Es kann auch erst eine hydrolysierbaren Verbindung mit Wasser hydrolysiert werden und die andere hydrolysierbare Verbindung zu einem späteren Zeitpunkt zu dieser Mischung gegeben werden Die Zugabe der gewünschten Wassermenge kann zeitlich in mehreren Portionen erfolgen. Im übrigen kann die Hydrolyse und Kondensation gemäß den dem Fachmann geläufigen Modalitäten durchgeführt werden.

Die oder eine der hydrolysierbaren Siliciumverbindungen weisen mindestens einen nicht hydrolysierbaren organischen Rest auf Dabei handelt es sich bevorzugt um ein Monoalkylsilan. Bevorzugt werden mindestens zwei hydrolysierbare Siliciumverbindungen zur Herstellung des Kondensats verwendet, wobei mindestens eine hydrolysierbare Siliciumverbindung mit mindestens einer nicht hydrolysierbaren organischen Gruppe und mindestens eine hydrolysierbare Siliciumverbindung ohne nicht hydrolysierbare Gruppe eingesetzt werden Bevorzugt umfassen die für das Hydrolysat oder Kondensat eingesetzten hydrolysierbaren Siliciumverbindungen mindestens eine und bevorzugt zwei Siliciumverbindungen mit mindestens drei hydrolysierbaren Gruppen. Auf diese Weise kann ein vernetztes Kondensat (Netzwerk) gebildet werden, auf dem die Matrix der zu bildenden Schicht basiert..

Als hydrolysierbare Siliciumverbindungen, die hier auch als Silane bezeichnet werden, werden bevorzugt ein oder mehrere Silane der allgemeinen Formel (I) verwendet

RₙSiX₄₋ₙ (I)

worin die Gruppen X, gleich oder verschieden voneinander, hydrolysierbare Gruppen oder Hydroxylgruppen sind, die Reste R, gleich oder verschieden voneinander, für nicht hydrolysierbare organische Gruppen stehen und n 0, 1 oder 2 bedeutet, wobei mindestens ein Silan der Formel (I) mit n = 1 oder 2, bevorzugt n = 1, verwendet wird. In einer bevorzugten Ausführungsform können mindestens zwei Silane der allgemeinen Formel (I) in Kombination eingesetzt werden, wobei ein Silan die allgemeine Formel (I), worin n = 1 oder 2, bevorzugt 1, und ein Silan die allgemeine Formel (I), worin n = 0 ist, aufweist Der Einsatz von Silanen mit mindestens einem nicht hydrolysierbaren organischen Rest verbessert die Flexibilität der Schicht und verringert das Rissvermögen.

In der allgemeinen Formel (I) sind die Gruppen X, die gleich oder voneinander verschieden sein können, hydrolysierbare Gruppen oder Hydroxyl Beispiele für hydrolysierbare Gruppen X sind Wasserstoff oder Halogen (F, Cl, Br oder I), Alkoxy (vorzugsweise C₁₋₆-Alkoxy, wie z. B Methoxy, Ethoxy, n-Propoxy, i-Propoxy und Butoxy), Aryloxy (vorzugsweise C₆₋₁₀-Aryloxy, wie z.B Phenoxy), Acyloxy (vorzugsweise C₁₋₆-Acyloxy, wie z. B Acetoxy oder Propionyloxy), Alkylcarbonyl (vorzugsweise C₂₋₇-Alkylcarbonyl, wie z.B. Acetyl), Amino, Monoalkylamino oder Dialkylamino mit vorzugsweise 1 bis 12, insbesondere 1 bis 6 Kohlenstoffatomen. Bevorzugte hydrolysierbare Reste sind Halogen, Alkoxygruppen, insbesondere C₁₋₄-Alkoxygruppen wie Methoxy, Ethoxy, n-Propoxy und i-Propoxy, wobei Methoxy und Ethoxy besonders bevorzugt sind. Am meisten bevorzugt für X ist Ethoxy.

Bei den Gruppen R in der allgemeinen Formel (I), die im Falle von n = 2 gleich oder verschieden sein können, handelt es sich z.B. um Wasserstoff, Alkyl-, Alkenyl- und Alkinylgruppen mit vorzugsweise bis zu 4 Kohlenstoffatomen und Aryl-, Aralkyl- und Alkarylgruppen mit vorzugsweise 6 bis 10 Kohlenstoffatomen, wobei Alkylgruppen bevorzugt sind. Konkrete Beispiele für derartige Gruppen sind Methyl, Ethyl, n-Propyl, i-Propyl, n-Butyl, sek.-Butyl und tert.-Butyl, Vinyl, Allyl und Propargyl, Phenyl, Tolyl und Benzyl. Die Gruppen können übliche Substituenten aufweisen, vorzugsweise tragen derartige Gruppen aber keinen Substituenten. Silane, die eine Alkylgruppe aufweisen werden auch als Alkylsilane, bzw. Monalkylsilane für n = 1 und Dialkylsilane für n = 2 bezeichnet. Bevorzugte Gruppen R sind Alkylgruppen mit 1 bis 4 Kohlenstoffatomen, insbesondere Methyl und Ethyl, sowie Phenyl, wobei Methyl besonders bevorzugt ist.

Beispiele für Silane der Formel (I) sind Si(OCH₃)₄, Si(OC₂H₅)₄, Si(O-n- oder i-C₃H₇)₄, Si(OC₄H₉)₄, SiCl₄, HSiCl₃, Si(OOCC₃H)₄, Methyltri(m)ethoxysilan ((M)ethoxy bedeutet Methoxy oder Ethoxy), Methyltripropoxysilan, Ethyltri(m)ethoxysilan, Phenyltri-(m)ethoxysilan, Dimethyldi(m)ethoxysilan und Diphenyldi(m)ethoxysilan Von diesen Silanen sind insbesondere Tetramethoxysilan und Tetraethoxysilan (TEOS) (n = 0) und Methyltriethoxysilan (MTEOS) (n = 1) bevorzugt. Eine Kombination von TEOS und MTEOS ist besonders bevorzugt

In der bevorzugten Ausführungsform, in der für das Hydrolysat oder Kondensat der Beschichtungszusammensetzung der Grundschicht und/oder der Deckschicht mindestens eine hydrolysierbare Siliciumverbindung mit mindestens einer nicht hydrolysierbaren organischen Gruppe und mindestens eine hydrolysierbare Siliciumverbindung ohne nicht hydrolysierbare Gruppe eingesetzt werden, wobei eine Kombination von TEOS und MTEOS besonders bevorzugt ist, kann das molare Verhältnis der eingesetzten hydrolysierbaren Siliciumverbindungen mit mindestens einer nicht hydrolysierbaren organischen Gruppe zu den eingesetzten hydrolysiertbaren Siliciumverbindungen ohne nicht hydrolysierbare Gruppe in breiten Bereichen variiert werden, wodurch der Vernetzungsgrad des entstehenden Netzwerks maßgeblich gesteuert werden kann, und kann z.B im Bereich von etwa 1:1 bis 10:1, bevorzugt von etwa 6:1 bis 2:1 liegen, wobei molare Verhältnisse von etwa 3:1 und etwa 4:1 und dazwischen besonders bevorzugt sind.

Zur Herstellung der Beschichtungszusammensetzung der Grundschicht und/oder der Deckschicht, insbesondere zur Herstellung des Hydrolysats oder Kondensats, können neben den hydrolysierbaren Siliciumverbindungen gegebenenfalls auch andere Verbindungen oder Salze, insbesondere hydrolysierbare Verbindungen oder Salze eingesetzt werden. Als weitere hydrolysierbare Verbindungen oder Salze kommen zum Beispiel hydrolysierbare Metall- oder Borverbindungen oder Metall- oder Borsalze in Betracht, z.B. hydrolysierbare Verbindungen oder Salze von B, Al, Ge, Sn, Y, Ce, Ti oder Zr oder der Übergangsmetalle Fe, Co, Ni, Cu, Zn, Nb oder Ta, wobei hydrolysierbare Verbindungen oder Salze von Titan, Aluminium, Zirconium und Bor besonders geeignet sind.. Die Verbindungen oder Salze sind bevorzugt hydrolysierbaren Verbindungen, insbesondere Alkoxide, oder thermisch zu oxidischen Komponenten reagierende Verbindungen, Komplexe oder Salze, die z. B organische oder metallorganische Liganden oder Anionen enthalten können oder leicht zersetzliche Nitrate sind, der genannten Metalle oder von Bor.

Bei der weiteren hydrolysierbaren Verbindung kann es sich um eine Verbindung der Formel MXₐ handeln, wobei M B, Al, Ge, Sn, Y, Ce, Ti, Zr, Fe, Co, Ni, Cu, Zn, Nb oder Ta, X gleich oder verschieden ist und hydrolytisch abspaltbare Gruppen oder Hydroxygruppen darstellt und a der Wertigkeit des Elements entspricht, wobei bei Einsatz von Komplexliganden a auch größer oder bei mehrzähnigen Liganden auch kleiner als die Wertigkeit von M sein kann, oder um entsprechende lösliche Oxide oder Hydroxide Die Wertigkeit von M ist in der Regel 1, 2, 3, 4 oder 5 Beispiele für X sind wie vorstehend für Formel (I) definiert, einschließlich der bevorzugten Beispiele, wobei zwei Gruppen X durch eine Oxogruppe ersetzt sein können

Geeignete hydrolysierbare Metall- oder Borverbindungen sind z.B. Ti(OC₂H₅)₄, Ti(O-n- oder i-C₃H₇)₄, Ti(OC₄H₉)₄, TiCl₄, Ti(O-iC₃H₇)₂Cl₂, Hexafluorotitansäure, TiOSO₄, Diisopropoxybis(ethylacetoacetato)titanat, Poly(dibutyltitanat), Tetrakis-(diethylamino)titan, Titan-2-ethylhexoxid, Titanbis(triethanolamin)diisopropoxid, Titanchloridtriisopropoxid, Al(OC₂H₅)₃, Al(O-sek.-C₄H₉)₃. AlCl(OH)₂, Al(NO₃)₃, Zr(OC₃H₇)₄, Zirconium-2-ethylhexoxid, BCl₃, B(OCH₃)₃ und SnCl₄, Zr(OC₃H₇)₂(OOC(CH₃)=CH₂)₂, Titanacetylacetonat, Titanoxidbis(pentandionat), Ti(OC₃H₇)₃(OOC(CH₃)=CH₂) und Ti(OC₂H₄)₃(Allylacetoacetat).

Bevorzugt handelt es sich bei den gegebenenfalls zugesetzten hydrolysierbaren Metall- oder Borverbindungen oder Metall- oder Borsalzen um Alkoxide oder thermisch zu oxidischen Komponenten reagierenden Verbindungen oder Salze von B, Al, Si, Ge, Sn, Y, Ce, Ti oder Zr oder den Übergangsmetallen Fe, Co, Ni, Cu, Zn, Nb oder Ta in Form von löslichen Alkoxiden oder löslichen, sich bei Temperaturen bis zu 400°C zersetzenden organischen oder metallorganischen Verbindungen oder Salzen, wie zum Beispiel Salze organischer Säuren oder Komplexe. Beispiele dafür sind Acetate, Formiate, Propinate oder Oxalate, aber auch alle anderen organischen Säuren, die im Reaktionsmedium löslich sind, der vorstehend genannten Metalle und von Bor. Darüber hinaus kommen die Literatur bekannte Beispiele von leicht zersetzlichen Nitraten infrage. Die eingesetzten Mengen der gegebenenfalls zugesetzten hydrolysierbaren Metall- oder Borverbindungen oder Metall- oder Borsalzen können in breiten Bereichen gewählt werden und können z.B. bei 1 bis 8 Gew.-%, bevorzugt bei 2,5 bis 7 Gew.-% und besonders bevorzugt bei 3 bis 4 Gew.-%, auf Basis aller eingesetzten Siliciumverbindungen in der jeweiligen Schicht

Die Hydrolyse oder Kondensation kann in Anwesenheit eines Lösungsmittels, wie einem organischen Lösungsmittel oder Wasser, durchgeführt werden Als organische Lösungsmittel eignen sich insbesondere mit Wasser mischbare Lösungsmittel wie beispielsweise ein- oder mehrwertige aliphatische Alkohole, vorzugsweise ein Alkohol mit 1 bis 4 Kohlenstoffatomen, wie z.B Methanol, Ethanol, Propanol und Isopropanol, Ether, wie Diether oder Methoxypropanol, Ester, wie Ethylacetat, Ketone, Amide, Sulfoxide und Sulfone Weitere geeignete Lösungsmittel oder Colösungsmittel sind z.B. Glycole wie Ethylenglycol, Propylenglycol oder Butylenglycol. Zweckmäßige Lösungsmittel sind z.B. Alkohole und Ether wie Methoxypropanol. Die Hydrolyse oder Kondensation kann in einer bevorzugten Ausführungsform auch in Abwesenheit eines Lösungsmittels durchgeführt werden Sofern Alkoxide als Ausgangsmaterial verwendet werden, bilden sich bei der Hydrolyse Alkohole, die dann als Lösungsmittel dienen können.

Ein besonderer Vorteil der Erfindung besteht aber unter anderem darin, dass außer der oder den hydrolysierbaren Siliciumverbindungen keine hydrolysierbaren Verbindungen von anderen Elementen wie Bor oder einem Übergangsmetall zur Bildung des Hydrolysats oder Kondensats, insbesondere des in der Grundschicht eingesetzten Kondensats, erforderlich sind und diese vorzugsweise auch nicht zur Herstellung des Hydrolysats oder Kondensats verwendet werden Dies schließt naturgemäß nicht die für die Deckschicht eingesetzten basischen Alkalimetallverbindungen ein Durch die Abwesenheit von in das Kondensat eingebauten Bor- oder Übergangsmetallatomen wird die Gelbildung verzögert und damit die Topf-beständigkeit deutlich verbessert Das Kondensat für die Deckschicht und insbesondere für die Grundschicht ist daher bevorzugt frei bzw. im wesentlichen frei von B und Übergangsmetallen. Bei den Matrices der Deckschicht und insbesondere der Grundschicht handelt es sich daher bevorzugt um eine Siliciumoxid- oder Silicatmatrix, die frei bzw. im wesentlich frei von Bor- und Übergangsmetalloxiden ist.

Die Beschichtungszusammensetzung für die Grundschicht umfasst neben der Bindemittelkomponente aus Hydrolysat oder Kondensat ferner eine Flexibilisierungskomponente aus mindestens einem linearen anorganischen Polymer. Es kann auch eine Mischung aus zwei oder mehr linearen anorganischen Polymeren verwendet werden. Das lineare anorganische Polymer ist gemäß allgemeiner Definition aus anorganischen Elementen in der Hauptkette aufgebaut und kann organische Reste als Seitengruppen aufweisen. Der Ausdruck lineares Polymer schließt nicht aus, dass das Polymer einige kürzere Seitenketten am linearen Grundgerüst aufweisen kann Es kann jedes bekannte lineare anorganische Polymer eingesetzt werden Es können die im Handel erhältlichen linearen anorganischen Polymere eingesetzt werden oder sie können über bekannte Herstellungsverfahren hergestellt werden, wobei insbesondere temperaturstabile, bewegliche Linearpolymere bzw Kettenpolymere zweckdienlich sind

Geeignete lineare anorganische Polymersysteme sind dem Fachmann bekannt und können entsprechenden Monographien entnommen werden, z B in Inorganic Polymers, Hrsg. P.G.A. Stone und W.A.G. Graham, Academic Press, New York und London, 1962, das diesbezüglich hier durch Bezugnahme aufgenommen wird Es kann jedes bekannte lineare anorganische Polymer eingesetzt werden. Beispiele sind Polyphosphate, Polysilazane, Polyphosphazene und Polysiloxane, wobei Polysiloxane bevorzugt sind. Bevorzugte Beispiele für Polysiloxane sind Polydialkylsiloxane, Polyalkylarylsiloxane und Polydiarylsiloxane, wobei Polydialkylsiloxane bevorzugt sind Konkrete Beispiele sind Polydimethylsiloxan, Polydiethylsiloxan, Polyphenylmethylsiloxan oder Polydiphenylsiloxan, wobei Polydimethylsiloxan besonders bevorzugt ist

Der Polymerisationsgrad des eingesetzten linearen anorganischen Polymers kann in breiten Bereichen variieren. Zweckmäßigerweise sollte er so sein, dass eine hohe Eigenviskosität bzw. weit reichende Elastizität vorliegt.. Bevorzugt haben die linearen anorganischen Polymere, insbesondere Polysiloxane wie Polydimethylsiloxan, eine Eigenviskosität im Bereich von etwa 20 bis 100 cSt, gemessen ohne Lösungsmittel, bei 24°C. Das Molekulargewicht des linearen anorganischen Polymers ist bevorzugt nicht zu hoch, so dass das Polymer noch in Alkoholen, wie zum Beispiel Isopropanol, löslich ist.

In einer bevorzugten Ausführungsform umfassen die linearen anorganischen Polymere, insbesondere die Polysiloxane wie PDMS, als Endgruppen oder auch an anderen Stellen reaktive Gruppen, über die das lineare anorganische Polymer, gemäß der nachstehend beschriebenen Ausführungsform, in das sich bildende Kondensat der Bindemittelkomponente eingebaut werden kann Diese reaktiven Gruppen des linearen anorganischen Polymers besitzen eine geeignete Reaktivität, um mit Silanolgruppen zu reagieren, so dass ein Einbau des Polymers in das aus dem Hydrolysat oder Kondensat gebildete Netzwerk über chemische Bindung ermöglicht wird. Geeignete reaktive Gruppe des linearen anorganischen Polymers sind z.B. Silanol-, Hydroxy- oder Halogenidgruppen Als Halogenidgruppen eignen sich Fluorid-, Chloride, Bromid- oder Iodidgruppen.

Es besteht unter gewissen Umständen die Möglichkeit, das lineare anorganische Polymer in situ herzustellen, indem die Bedingungen so eingestellt werden, dass aus einer Mischung von den hydrolysierbaren Siliciumverbindungen für das Hydrolysat oder Kondensat und Vorstufen bzw Monomeren für das lineare anorganische Polymer nur die Vorstufen unter Bildung des linearen Polymers reagieren und dann erst die Hydrolyse bzw Kondensation der hydrolysierbaren Siliciumverbindungen stattfindet. Man kann z.B. die Vorstufen für das lineare anorganische Polymer vorhydrolysieren und in dieser Form zu den hydrolysierbaren Siliciumverbindungen geben, um die alleinige Reaktion der Vorstufen zu erreichen, und erst im Anschluss die Hydrolyse der hydrolysierbaren Siliciumverbindungen initiierten. Diese Vorgehensweise ist aber in der Regel schwierig und bedarf einer genauen Einstellung der Bedingungen und Überwachung des Systems, um das gewünschte Ergebnis zu erzielen, so dass die Zugabe des fertigen linearen anorganischen Polymers zu den hydrolysierbaren Siliciumverbindungen und anschließender Initiierung der Hydrolyse im allgemeinen bevorzugt ist.

Es hat sich herausgestellt, dass die Rissbildung durch Zugabe von einem linearen anorganischen Polymer, insbesondere PDMS, weitgehend unterdrückt oder sogar ganz abgestellt werden kann Das lineare anorganische Polymer in der Beschichtungszusammensetzung für die Grundschicht bewirkt offenbar eine Flexibilisierung der Schicht, so dass die Rissbildung der Grundschicht, z B hervorgerufen durch Versprödung, erstaunlicherweise signifikant reduziert ist Die Zugabe des zu PDMS entsprechenden Monomers DMDEOS führt nicht zu diesem Resultat, da das Monomer molekular ins Netzwerk des sich bildenden Kondensats eingebaut wird, so dass sich keine flexible PDMS-Einheit bilden kann. Durch die Zugabe von linearem anorganischem Polymer als Flexibilisierungskomponente weist die Grundschicht ein flexibilisiertes silikatisches Netzwerk auf.

In der WO 2008/049846 wurde Rissfreiheit durch eine Silicium-Bor-Grundschicht erreicht Allerdings nicht mit der gleichen guten Reproduzierbarkeit wie durch das erfindungsgemäße Verfahren Tatsächlich sind die gemäß der vorliegenden Erfindung hergestellten Schichten den in WO 2008/049846 beschriebenen Si-B-Systemen in jeder Hinsicht überlegen, wenn Grad und Ausmaß der Rissbildung vergleichend mit dem Mikroskop untersucht wird Ein weiterer Vorteil ist die bereits vorstehend beschriebene höhere Topfbeständigkeit der erfindungsgemäß verwendeten Beschichtungszusammensetzung für die Grundschicht gegenüber der Beschichtungszusammensetzung der Silicium-Bor-Grundschicht nach dem Stand der Technik

In der Beschichtungszusammensetzung für die Deckschicht ist neben dem Hydrolysat oder Kondensat ferner mindestens eine basische Alkalimetallverbindung enthalten, d.h. basische Verbindungen von Li, Na, K, Rb oder Cs, wobei der Einsatz von mindestens einer basischen Alkalimetallverbindung von einem "schweren Alkalimetal", d h. von K, Rb oder Cs, besonders bevorzugt ist. Beispiele für geeignete basische Alkalimetallverbindungen sind Hydroxide, Oxide oder Alkoxide, wie Methoxide, Ethoxide oder Propoxide, oder Carbonate, wobei die Hydroxide bevorzugt sind. Konkrete Beispiele sind Alkalimetallhydroxide, wie LiOH, NaOH, KOH, RbOH und CsOH, Li₂O, Na₂O, K₂O, Rb₂O, Cs₂O, LiCO₃, NaCO₃, LiCO₃, KCO₃, RbCO₃, und CsCO₃

Der Einsatz der von mindestens einer basischen Verbindung von einem "schweren Alkalimetall", insbesondere KOH, RbOH und CsOH, ist bevorzugte. Bevorzugt enthält die Beschichtungszusammensetzung für die Deckschicht mindestens zwei basische Alkalimetallverbindungen, wobei die Alkalimetalle der beiden Verbindungen bevorzugt verschieden voneinander sind und wobei bevorzugter eines davon und noch bevorzugter zwei eine Verbindung von einem "schweren Alkalimetall" sind. Wenn zwei Verbindungen von "schweren Alkalimetallen" eingesetzt werden, handelt es sich bevorzugt um Verbindungen von verschiedenen "schweren Alkalimetallen", z.B. basische Verbindungen von K und Rb, z.B. KOH und RbOH, oder basische Verbindungen von K und Cs, z B KOH und CsOH

Vollkommen uberraschend ist die Tatsache, dass die Verwendung von basischen Verbindungen wie Hydroxiden von "schweren Alkalimetallen" (also K, Rb, Cs) und deren Mischungen eine wesentlich bessere Alkali- bzw Spülmaschinenfestigkeit liefert als z.B. Systeme mit basischen Verbindungen wie Hydroxiden von Na und/oder K. Dies wurde durch vergleichende Untersuchungen nachgewiesen So zeigt eine Beschichtung mit Na-K bereits nach ca. 4 Tagen Lagerung in einer Lösung von CALGONIT^{®} in warmem Wasser deutliche Auslaugung (Glaskorrosion), während eine entsprechende Schicht mit K-Cs keine optische Beeinträchtigung zeigt.

Während allgemein die Verwendung von Mischungen von mindestens zwei Alkalimetallen meist bessere Eigenschaften zeigt als die einzelnen Alkalimetalle ("Mischalkali-Effekt"), ist die bessere Performance der Systeme mit schweren Alkalimetallen aus der Literatur nicht einfach abzuleiten Tatsächlich ist sogar bekannt, dass K, Rb und Cs alle eine geringere "Dietzel-Feldstärke" aufweisen als z. B Li und Na. Durch die Größe der Ionen von K⁺, Rb⁺ und Cs⁺ ist eine wesentlich schwächere Bindung zum silicatischen Netzwerk zu erwarten und die Auslaugung sollte schneller erfolgen. Dies wird aber nicht beobachtet

Die Beschichtungszusammensetzung der Grundschicht und/oder die Beschichtung zusammensetzung der Deckschicht können gegebenenfalls weitere Komponenten enthalten, die als Additive für solche Beschichtungssysteme üblich sind, wie z.B. Lösungsmittel, Pigmente, Verlaufmittel, Mattierungsmittel, wie z.B. mikroskalige SiO₂-Pulver, organische Mattierungsmittel oder keramische Pulver, Sinterhilfsmittel, Tenside und Viskositätsverbesserer.

Die Grundschicht und die Deckschicht sind im allgemeinen transparent. Bei der Beschichtungszusammensetzung für die Deckschicht können z.B. Mattierungsmittel zugesetzt werden, um mattierte Schichten mit Anti-Fingerprint-Eigenschaften zu erreichen. In einer weiteren Ausführungsform können der Beschichtungszusammensetzung für die Deckschicht und/oder der Grundschicht als Additive auch farbgebende anorganische Pigmente beigemischt werden, um Farbeffekte zu erzielen. Bei den Farbpigmenten kann es sich um übliche im Handel erhältliche Pigmente handeln.

Es können selbstverständlich alle geeigneten Farbpigmente eingesetzt werden, insbesondere anorganische Farbpigmenten. Zusammenfassende Darstellungen zu geeigneten Farbpigmenten finden sich z.B. in Ullmanns Encyklopädie der technischen Chemie, 4 Auflage, Bd. 18, S 569-645 Beispiele sind schwarze Eisenoxid-Pigmente, wie FK 3161 (Fa. Ferro Gmbh, aus Co/Fe/Cr), Black 1 G (The Sheperd Coloro Company) und Eisenoxidschwarz 1310 HR (Liebau Metox GmbH), schwarze Russpigmente, wie Timrex KS4 (Timcal Graphit & Carbon, Russpaste DINP 25/V und Tack AC 15/200 (Gustav Grolman GmbH & Co. KG), Graphit, Metalloxid-Pigmente, wie farbige Eisenoxid-Pigmente, Chromoxid-Pigmente, Mischmetalloxid-Pigmente (z.B. Ni/Sb[Ti-Oxid, Co/Al-Oxid, Mn/Cu/Cr-Oxid, Fe/Cr-Oxid), Mischungen von Metalloxid-Pigmenten und Graphit, Cadmium-Pigmente (z.B CdS, Cd(S, Se)), Bismuth-Pigmente, Chromat-Pigment, wie Chromgelb, Chromgrün, Molybdatrot, Ultramarin-Pigmente und Berliner Blau.

In einer bevorzugten Ausführungsform enthält die Beschichtungszusammensetzung für die Grundschicht ferner Teilchen, insbesondere anorganische Feststoffteilchen und vorzugsweise nanoskalige Teilchen, insbesondere aus einem Metall- oder Halbmetalloxid, wie SiO₂. Gegebenenfalls können solche Teilchen auch in der Beschichtungszusammensetzung für die Deckschicht verwendet werden. Die Teilchen können jede geeignete Größe aufweisen, z.B. mit einem mittleren Teilchendurchmesser von weniger als 1 µm. Unter nanoskaligen Teilchen werden vorzugsweise Teilchen mit einem mittleren Teilchendurchmesser von nicht mehr als 200 nm, bevorzugter nicht mehr als 100 nm und insbesondere nicht mehr als 50 nm verstanden Der mittlere Teilchendurchmesser bezieht sich auf das Volumenmittel (d₅₀), wobei ein UPA (Ultrafine Particle Analyzer, Leeds Northrup (laseroptisch, dynamische Laserlichtstreuung)) zur Messung verwendet werden kann

Bevorzugt handelt es sich um Teilchen aus Metall- oder Halbmetallverbindungen, insbesondere Metall- oder Halbmetallchalkogeniden. Hierfür können alle Metalle oder Halbmetalle (im folgenden auch gemeinsam als M abgekürzt) eingesetzt werden Bevorzugte Metalle oder Halbmetalle M für die Metall- oder Halbmetallverbindungen sind z.B. Mg, B, Al, Ga, In, Si, Ge, Sn, Pb, Y, Ti, Zr, V, Nb, Ta, Mo, W, Fe, Cu, Ag, Zn, Cd, Ce und La oder Mischungen davon Es kann eine Art von Nanopartikel oder eine Mischung von Nanopartikeln eingesetzt werden Die Teilchen können auf verschiedene Weise hergestellt werden, z.B. durch Flammpyrolyse, Plasmaverfahren, Kolloidtechniken, Sol-Gel-Prozesse, kontrollierte Keim- und Wachstumsprozesse, MOCVD-Verfahren und Emulsionsverfahren. Diese Verfahren sind in der Literatur ausführlich beschrieben

Beispiele sind (gegebenenfalls hydratisierte) Oxide wie ZnO, CdO, SiO₂, GeO₂, TiO₂, ZrO₂, CeO₂, SnO₂, Al₂O₃ (insbesondere Böhmit, AIO(OH), auch als Aluminiumhydroxid), B₂O₃, In₂O₃, La₂O₃, Fe₂O₃, Fe₃O₄, Cu₂O, Ta₂O₅, Nb₂O₅, V₂O₅, MoO₃ oder WO₃; Phosphate, Silicate, Zirconate, Aluminate, Stannate von Metallen oder Halbmetallen, und entsprechende Mischoxide, Spinelle, Ferrite oder Mischoxide mit Perowskitstruktur wie BaTiO₃ und PbTiO₃.

Bevorzugt sind SiO₂-Teilchen Es können z.B. handelsübliche Kieselsäureprodukte, z.B. Kieselsole, wie die Levasile^{®}, Kieselsole der Bayer AG, oder pyrogene Kieselsäuren, z.B. die Aerosil-Produkte von Degussa, verwendet werden. Die teilchenförmigen Materialien können in Form von Pulvern und Solen eingesetzt werden.

Die Komponenten für die Beschichtungszusammensetzungen der Grundschicht und der Deckschicht können in beliebiger Reihenfolge zusammengegeben werden. Die Hydrolyse und Kondensation der hydrolysierbaren Siliciumverbindungen zur Bildung des Hydrolysats oder Kondensats für die Beschichtungszusammensetzung der Grundschicht erfolgt bevorzugt in Anwesenheit des linearen anorganischen Polymers, bevorzugt von Polydimethylsiloxan, und, falls eingesetzt, der Teilchen. In diesem Fall werden z B. die hydrolysierbaren Siliciumverbindungen, das lineare anorganische Polymer und gegebenenfalls die Teilchen gemischt und dann wird die Hydrolyse und Kondensation durch Zugabe von Wasser und gegebenenfalls einem Katalysator, bevorzugt einem sauren Katalysator, eingeleitet Das lineare anorganische Polymer und, falls eingesetzt, die Teilchen, können aber gegebenenfalls auch nach Bildung des Kondensats zugesetzt werden, wobei die Hydrolyse und Kondensation ebenfalls durch Zugabe von Wasser und gegebenenfalls einem Katalysator, bevorzugt einem sauren Katalysator, eingeleitet wird.

Bei der bevorzugten Ausführungsform, bei der die hydrolysierbaren Siliciumverbindungen in Anwesenheit des linearen anorganischen Polymers hydrolysiert werden, wird eine bessere Verteilung im sich bildenden Kondensat erreicht Wenn das lineare anorganische Polymer, wie es bevorzugt ist, die vorstehend beschriebenen reaktiven Gruppen aufweist, die an den Hydrolyse- und Kondensationsreaktionen teilnehmen können, wird das lineare anorganische Polymer auch durch chemische Bindung als Flexibilisierungskomponente in das sich bildende Kondensat eingebaut

Die Hydrolyse und Kondensation der hydrolysierbaren Siliciumverbindungen zur Bildung des Kondensats für die Beschichtungszusammensetzung der Deckschicht erfolgt dabei bevorzugt in Anwesenheit der mindestens einen basischen Alkalimetallverbindung.. In diesem Fall werden z.B. die hydrolysierbaren Siliciumverbindungen und die mindestens eine basische Alkalimetallverbindung gemischt, bevorzugt bis zur Auflösung der basischen Alkalimetallverbindung, und dann wird die Hydrolyse und Kondensation durch Zugabe von Wasser eingeleitet. Die basische Alkalimetallverbindung wirkt dabei als Base auch als Katalysator für die Hydrolyse und Kondensation. Durch die eingesetzte basische Alkalimetallverbindung wird ein Silicat-Kondensat erhalten Zusätzliche Additive für die Beschichtungszusammensetzung der Grundschicht oder der Deckschicht werden im allgemeinen nach Bildung des Kondensats hinzugegeben Eine Zugabe vor Bildung des Kondensats ist aber auch möglich.

Für die Beschichtungszusammensetzung der Grundschicht kann das Gewichtsverhältnis von eingesetzten hydrolysierbaren Siliciumverbindungen für das Hydrolysat oder Kondensat zu dem linearen anorganischen Polymer in weiten Bereichen variieren, z.B. von 50:1 bis 1:1 und bevorzugt 20:1 bis 3:1. Für die Beschichtungszusammensetzung der Deckschicht kann das Verhältnis von eingesetzten hydrolysierbaren Siliciumverbindungen für das Hydrolysat oder Kondensat zu den eingesetzten basischen Alkalimetallverbindungen in weiten Bereichen variieren, z.B. kann dieses Verhältnis so gewählt werden, dass das molare Verhältnis der Siliciumatome der hydrolysierbaren Siliciumverbindungen zu den Alkalimetallatomen in den basischen Alkalimetallverbindungen im Bereich von 20:1 bis 2:1 und bevorzugt 15:1 bis 4:1 liegt

Die Beschichtungszusammensetzungen der Grundschicht und der Deckschicht werden, nachdem gegebenenfalls die Viskosität durch Zugabe oder Entfernen von Lösungsmittel eingestellt wurde, jeweils mit den üblichen nasschemischen Beschichtungsverfahren auf das zu beschichtende Substrat aufgebracht. Anwendbare Techniken sind zum Beispiel das Tauchen, Gießen, Schleudern, Sprühen oder Aufstreichen, wobei Sprühen und Streichen bevorzugt sind. Die Beschichtungszusammensetzungen werden besonders bevorzugt durch Sprühen aufgetragen

Nach Auftrag der Beschichtungszusammensetzung für die Grundschicht wird diese gegebenenfalls getrocknet und dann bevorzugt thermisch behandelt, um die Grundschicht zu bilden. Im Anschluss daran wird die Beschichtungszusammensetzung der Deckschicht auf die Grundschicht aufgebracht und bevorzugt thermisch behandelt, um die Deckschicht zu bilden. Dies ist die bevorzugte Vorgehensweise. Alternativ kann nach Auftrag der Beschichtungszusammensetzung der Grundschicht direkt die Beschichtungszusammensetzung der Deckschicht aufgebracht werden. Beide Schichten können dann gemeinsam unter Bildung der Grundschicht und Deckschicht thermisch behandelt werden, wobei in diesem Fall vor Auftrag der Beschichtungszusammensetzung der Deckschicht die aufgetragene Zusammensetzung der Grundschicht zwar nicht vollständig aber in einem gewissen Maß verfestigt werden kann, z.B. durch Trocknung oder durch thermische Vorbehandlung, z.B. bei niedrigeren Temperaturen und für kürzere Zeit, ohne dass es zu einer vollständigen Aushärtung kommt

Die optionale Trocknung und die thermische Behandlung der beiden Schichten können im wesentlichen auf gleiche Weise erfolgen, unabhängig davon ob eine gesonderte oder gemeinsame thermische Behandlung durchgeführt wird Die nachfolgenden Ausführungen gelten somit für beide Schichten gleichermaßen.

Die aufgetragenen Beschichtungszusammensetzungen werden bevorzugt thermisch behandelt, um eine Verdichtung bzw Härtung zu erreichen.. Die thermische Behandlung zur Verdichtung der Schichten kann für beide Schichten gleichzeitig oder bevorzugt für jede Schicht gesondert durchgeführt werden, d.h zunächst wird die aufgetragene Beschichtungszusammensetzung für die Grundschicht, gegebenenfalls nach Trocknung, thermisch verdichtet, dann wird die Beschichtungszusammensetzung für die Deckschicht aufgebracht und dann, gegebenenfalls nach Trocknung, thermisch verdichtet Vor der thermischen Verdichtung kann eine Trocknung der Beschichtungszusammensetzung bei Raumtemperatur bzw. leicht erhöhter Temperatur, z.B. einer Temperatur von bis zu 100°C oder bis zu 80°C, durchgeführt werden

Obwohl sich die Temperatur oder Endtemperatur bei der thermischen Behandlung auch an der Wärmebeständigkeit des Substrats orientieren muss, liegt diese Temperatur bevorzugt bei mindestens 300°C, bevorzugter mindestens 350°C und besonders bevorzugt mindestens 400°C oder mindestens 420°C Die Endtemperatur kann durch eine allmähliche Erhöhung der Temperatur, z.B. mit bestimmten Temperatursteigerungen im Zeitintervall, erreicht werden oder das beschichtete Substrat wird in eine Umgebung, z.B. einen Ofen, gebracht, die bereits die gewünschte Behandlungstemperatur aufweist.

Die maximalen Temperaturen für die thermische Behandlung hängen natürlich auch von der thermischen Beständigkeit der zu behandelnden Substrate ab und können bis kurz unter dem Erweichungspunkt des Substrats liegen In der Regel liegen die Temperaturen zur thermischen Behandlung unter 800°C

Es ist überraschend, dass die Verdichtung der beiden Schichten schon bei Temperaturen stattfindet, die deutlich kleiner sind als die Glasübergangstemperatur der zu verdichtenden Schicht Dies wird der Nanoskaligkeit bzw. Struktur der Xerogelschichten, die sich nach Auftrag der Beschichtungszusammensetzung bilden, zugeordnet und ermöglicht für die jeweilige Schicht eine thermische Verdichtung bei relativ niedrigen Temperaturen.

Die Verdichtung der Grundschicht und der Deckschicht kann daher bevorzugt jeweils bei Temperaturen unterhalb der Glasübergangstemperaturen der jeweiligen Schicht erfolgen. Die maximale Verdichtungstemperatur der Grundschicht und/oder der Deckschicht beträgt daher bevorzugt jeweils nicht mehr als 580°C und bevorzugter nicht mehr als 500°C Diese Verdichtungstemperatur liegt deutlich unter den gängigen Werten der Transformationsintervalle oder Glasübergangstemperaturen für hydrolysestabile Alkalimetallsilicate. Der vorteilhafte Verdichtungsmechanismus bzw. die Porenschließung wurde anhand geeigneter Korrosionstests, wie Säurestabilitätstest, Laugenstabilitätstest und Cu-Korrosionstest, belegt Selbstverständlich können die beiden Schichten bei verschiedenen Temperaturen verdichtet werden.

Als Atmosphäre bei der Verdichtung kann z.B. die normale Atmosphäre der Umgebung, eine mit Inertgas oder einem anderen Gas angereicherte Atmosphäre oder eine reine Inertgasatmosphäre gewählt werden. Über den Wasserdampfgehalt in der Atmosphäre können die Verdichtungstemperatur und die Verdichtungsdauer optimiert werden.

Nach der thermischen Behandlung wird eine stabilisierte, d h. verdichtete oder gehärtete Schicht erhalten. Wenn das Substrat, z.B. eine metallische Oberfläche, insbesondere bei diesen hohen Temperaturen oxidationsempfindlich ist, empfiehlt es sich, die thermische Verdichtung in einer sauerstofffreien Atmosphäre, z.B. unter Stickstoff oder Argon, durchzuführen. Ebenso ist eine Verdichtung im Vakuum möglich. Die Wärmebehandlung zum Verdichten kann z.B. im Ofen, mittels IR-Bestrahlung, Laser-Strahlung oder durch Beflammen erfolgen. Durch die Wärmebehandlung wird die Schutzschicht getempert.

Die Beschichtungszusammensetzungen können zu rissfreien und transparenten Schichten verdichtet werden, selbst wenn sich auf der zu beschichtenden Oberfläche des Substrats poröse Schichten befinden.

Es ist ein besonderer Vorteil des erfindungsgemäßen Verfahrens, dass man rissfreie Schichten, auch ungefüllte, erhält, deren Dicke weit über den Dicken liegen, die mit üblichen Sol-Gel-Schichten erreichbar sind (unter 1 µm bei Einmalbeschichtung). Ein weitere Vorteil besteht darin, dass es gelingt, über übliche Sprühverfahren relativ dünne Schichten, wie von etwa 2 bis 4 µm, z.B. ungefähr 3 µm, bezogen auf die Trockenschichtdicke, in gleichmäßiger Schichtdicke zu erhalten Es können z B. Grundschichten mit einer Dicke von etwa 1 bis 12 µm, bevorzugt etwa 4 bis 9 µm, und Deckschichten mit einer Dicke von etwa 0,5 bis 7 µm, bevorzugt etwa 1,5 bis 5 µm, bezogen auf die Trockenschichtdicke, hergestellt werden Die Trockenschichtdicke von beiden Schichten zusammen kann z.B. etwa 8 bis 12 µm betragen

Nach dem erfindungsgemäßen Verfahren wird eine zweischichtige Schutzschicht jeweils mit einer Matrix aus Siliciumoxid oder Silicat erhalten.. Die Grundschicht ist bevorzugt frei von Boroxid und auch bevorzugt frei von Übergangsmetalloxiden in der Matrix. Dies schließt die Einlagerung von Komponenten, wie z.B Farbpigmenten, bei denen es sich um Metalloxide handeln kann, in die Matrix nicht aus, da sie nicht Bestandteil der Matrix selbst sind.. Die Oxidschichten können die oben genannten Additive, wie Pigmente, umfassen.

Die erhaltene Schutzschicht aus zwei Schichten bietet einen außerordentlich guten Schutz gegen einen Angriff durch alkalische Medien. Durch die Grundschicht wird eine rissfreie Oberfläche gewährleistet Durch die Deckschicht wird die Schutzschicht ausreichende spülmaschinenfest bzw. alkalibeständig.. Die erhaltene Schutzschicht ist auch erstaunlich abriebfest

Nach der erfindungsgemäßen Beschichtung des Substrats liegt demnach eine Oberfläche vor, die a) alkalibeständig (Laugen) b) spülmaschinenfest und c) abriebbeständig ist "Spülmaschinenfest" wird definiert als stabil gegen den kombinierten Einsatz handelsüblicher Reinigungsmittel (Säuren, Basen, Komplexbildner, Tenside) und von warmem Wasser. Vollkommen überraschend ist die Tatsache, dass die Verwendung von "schweren Alkalimetallen" und deren Mischungen (also K, Rb, Cs) eine noch wesentlich verbesserte Alkali- bzw Spülmaschinenfestigkeit liefert als z.B. Systeme mit Na und/oder K

Die erfindungsgemäß verwendete Schutzschicht eignet sich insbesondere zur Beschichtung der oben genannten Gegenstände. Die Schutzschicht ist in der Regel glasklar und transparent und kann so aufgetragen werden, dass das Substrat, wie z.B. eine metallische Oberfläche, in ihrem Aussehen nicht verändert wird, selbst wenn ein Dekor, z.B. durch Farbanodisierung, vorhanden ist. Durch Einsatz von Mattierungsmittein, insbesondere in der Deckschicht, kann das Aussehen etwa bezüglich des Glanzes optimiert werden. Die Schutzschicht eignet sich auch für eine Anti-Fingerprint-Ausrüstung. Der dekorative Effekt von Substraten, wie z.B. metallischen Oberflächen, auch von strukturierten Oberflächen, bleibt wegen der optisch neutralen Wirkung der Beschichtung erhalten.

Das erfindungsgemäße System eignet sich insbesondere als alkalibeständige Schutzschicht von Oberflächen von Leichtmetall und insbesondere als spülmaschinenfeste und abriebbeständige Schutzschicht Die folgenden Beispiele erläutern die Erfindung.

### Beispiele

### A. Behandlung Substrat

Die Reinigung der Substrate erfolgt mit üblichen Lösungsmitteln wie Wasser, Ethanol oder Aceton Die Substrate werden durch Eintauchen in NaOH-Lösung (1 Gew.-%) für 1 min aktiviert und dann in HNO₃ (10 Gew-%) neutralisiert und mit Wasser und Aceton gespült

### B. Beschichtungszusammensetzung für Grundschicht

MTEOS (32,1 g), PDMS (3,5 g) und TEOS (10,4 g) wurden miteinander vermischt und gerührt. Dann wurde diese Mischung in zwei gleiche Teile aufgeteilt Eine Mischung von Levasil^{®} 300/30 (7,72 g) and konz HNO₃ (0,22 g) wurde dann unter kontinuierlichem Rühren zu einem Teil der MTEOS/PDMS/TEOS-Mischung gegeben Dieses Sol wird kontinuierlich gerührt, bis die Lösung trübe wird und schließlich der Klarpunkt erreicht wird (die Reaktion ist ziemlich exotherm). Wenn der Klarpunkt erreicht ist, wird der Reaktor in ein Eisbad gestellt und die andere Hälfte von MTEOS/PDMS/TEOS zugegeben. Die Lösung wird wieder trüb Wenn die Reaktionmischung Raumtemperatur erreicht hat, wird destillierten Wasser (5,652 g) hinzugefügt und die Mischung wird wieder klar

Danach kann falls gewünscht Pigment zugesetzt werden In den ersten Versuchen wurden etwa 23% bezogen auf den Endfeststoffgehalt des Lacks eingesetzt, was für die vorstehend beschriebene Synthese 5,59 g Pigment (z.B.: Ferro 240944) bedeuten würde. Die Dispersion der Pigmente in den Lack erfolgt zuerst durch Magnetrühren und dann mittels Ultraschallbad für 5 min

### C. Beschichtung mit Grundschicht

Der Auftrag der Beschichtung auf das aktivierte Substrat erfolgte durch ein Sprühverfahren mit einer Düse von 0,5 mm, einem dynamischen Druck von etwa 1,5 bar und einem Abstand von 30 cm Die Nassschichtdicke sollte etwa 6 bis 12 µm betragen Alternativ kann eine Bürstentechnik verwendet werden

Nach dem Auftrag der ersten Beschichtung wurden die Proben gehärtet, um die Grundschicht zu verdichten. Diese Verdichtung erfolgt nach einem Schnelltemperverfahren ("rapid annealing process"): Die Proben wurden in einen Ofen mit einer Temperatur von 480°C in Luft für 30 min gestellt, danach wurden sie direkt aus dem Ofen entfernt, so dass die Proben auf Raumtemperatur abkühlen konnten.

Nach der ersten Härtung sollte die Trockenschichtdicke im Bereich von etwa 4 bis 9 µm liegen.

### D. Beschichtungszusammensetzung für Deckschicht

MTEOS (44,5 g) und TEOS (13,06 g) wurden miteinander vermischt und gerührt und dann wurden KOH (1,12 g) und CsOH (3,5 g) unter kontinuierlichem Rühren zugegeben. Diese Mischung wurde einige Stunden gerührt, um die festen Alkaliverbindungen vollständig zu lösen. Nach vollständiger Auflösung wurde eine Mischung aus destilliertem Wasser (6,39 g) und Methoxypropanol (90 g) langsam tropfenweise unter kontinuierlichem Rühren zugegeben. Während dieses Schritts sollte die Temperatur im Reaktionsbehälter immer zwischen 32 und 36°C liegen Nach vollständiger Zugabe wurde das fertige Sol auf RT heruntergekühlt.

Danach kann bei Bedarf Pigment zugegeben werden In den Versuchen wurden etwa 5% des Endfeststoffgehalts des Lacks zugesetzt. Dies bedeutet für die vorstehend beschriebene Synthese eine Menge von 1,225 g Pigment (in den Versuchen wurde Bayferrox 303T verwendet). Die Dispersion der Pigmente in den Lack erfolgt zuerst durch Magnetrühren und dann mittels Ultraschallbad für 5 min.

### E. Beschichtung mit Deckschicht

Der Auftrag der Beschichtungszusammensetzung für die Deckschicht auf die Grundschicht erfolgte durch Aufsprühen (alternativ: Aufstreichen) mit einer Düse von 0,5 mm, einem dynamischen Druck von etwa 1,5 bar und einem Abstand von 20 cm Die Nassschichtdicke sollte zwischen 3 und 10 µm liegen.

Nach dem Auftrag wurde die Deckschicht gehärtet, um die Beschichtung zu verdichten. Diese Verdichtung erfolgt nach einem Schnelltemperverfahren Dabei wurden die Proben in einen Ofen mit einer Temperatur von 480°C in Luft für 30 min gestellt, danach wurden sie direkt aus dem Ofen entfernt, so dass die Proben auf Raumtemperatur abkühlen konnten

Nach der Härtung sollte die Trockenschichtdicke der Deckschicht im Bereich von etwa 1,5 bis 5 µm liegen

Nach der Härtung sollte die Trockenschichtdicke von beiden Schichten zusammen etwa 8 bis 12 µm betragen.

### F. Vergleichsbeispiele

Schutzbeschichtungen wurden gemäß den Beispielen von WO 2008/049846 hergestellt und mit den nach der Erfindung hergestellten Schutzschichten verglichen Grad und Ausmaß der Rissbildung in den jeweiligen Grundschichten wurden mit dem Mikroskop untersucht, wobei in den erfindungsgemäß hergestellten Grundschichten eine deutlich verminderte Rissbildung gegenüber der Silicium-Bor-Grundschicht nach dem Stand der Technik festgestellt wurde. Die Lagerbeständigkeit der erfindungsgemäß hergestellten Beschichtungszusammensetzung für die Grundschicht war deutlich höher als die der Beschichtungszusammensetzung für die Si-B-Grundschicht nach dem Stand der Technik, da die Si-B-Systeme sehr schnell gelieren.

## Patentansprüche

1. Verfahren zur Herstellung einer Schutzschicht aus Grundschicht und Deckschicht auf einem Substrat, bei dem
a) eine Beschichtungszusammensetzung, umfassend eine Bindemittelkomponente aus einem Hydrolysat oder Kondensat von einer oder mehreren hydrolysierbaren Siliciumverbindungen, wobei mindestens eine hydrolysierbare Siliciumverbindung mindestens eine nicht hydrolysierbare organische Gruppe aufweist, und eine Flexibilisierungskomponente aus mindestens einem linearen anorganischen Polymer, nasschemisch auf das Substrat aufgebracht und verdichtet wird, um die Grundschicht zu bilden, und
b) eine Beschichtungszusammensetzung, die mindestens eine basische Alkalimetallverbindung und ein Hydrolysat oder Kondensat von einer oder mehreren hydrolysierbaren Siliciumverbindungen, wobei mindestens eine hydrolysierbaren Siliciumverbindung mindestens eine nicht hydrolysierbare organische Gruppe aufweist, umfasst, nasschemisch auf die Grundschicht aufgebracht und verdichtet wird, um die Deckschicht zu bilden

2. Verfahren nach Anspruch 1, **dadurch gekennzeichnet, dass** die Beschichtungszusammensetzung für die Deckschicht mindestens eine basische Alkalimetallverbindung ausgewählt aus einer Kalium-, Rubidium- oder Cäsiumverbindung umfasst.

3. Verfahren nach Anspruch 1 oder Anspruch 2, **dadurch gekennzeichnet, dass** die aufgetragene Beschichtungszusammensetzung für die Grundschicht und/ oder die aufgetragene Beschichtungszusammensetzung für die Deckschicht, thermisch verdichtet werden, um die Grundschicht und/oder die Deckschicht zu bilden, wobei die jeweilige Verdichtungstemperatur kleiner ist als die Glasübergangstemperatur der zu verdichtenden Schicht

4. Verfahren nach einem der Ansprüche 1 bis 3, **dadurch gekennzeichnet, dass** das lineare anorganische Polymer ein lineares Polysiloxan, vorzugsweise ein Polydialkysiloxan, ist

5. Verfahren nach einem der Ansprüche 1 bis 4, **dadurch gekennzeichnet, dass** die hydrolysierbare Siliciumverbindung mit mindestens einer nicht hydrolysierbaren organischen Gruppe für die Beschichtungszusammensetzung der Grundschicht ein Monoalkylsilan ist und/oder die hydrolysierbare Siliciumverbindung mit mindestens einer nicht hydrolysierbaren organischen Gruppe für die Beschichtungszusammensetzung der Deckschicht ein Monoalkylsilan ist

6. Verfahren nach einem der Ansprüche 1 bis 5, **dadurch gekennzeichnet, dass** für das Hydrolysat oder Kondensat der Beschichtungszusammensetzung der Grundschicht und/oder der Deckschicht mindestens eine hydrolysierbare Siliciumverbindung mit mindestens einer nicht hydrolysierbaren organischen Gruppe und mindestens eine hydrolysierbare Siliciumverbindung ohne nicht hydrolysierbare Gruppe verwendet werden

7. Verfahren nach einem der Ansprüche 1 bis 6, **dadurch gekennzeichnet, dass** die Beschichtungszusammensetzung für die Deckschicht mindestens zwei basische Alkalimetallverbindungen umfasst.

8. Verfahren nach einem der Ansprüche 1 bis 7, **dadurch gekennzeichnet, dass**
a) zur Herstellung der Beschichtungszusammensetzung für die Grundschicht die eine oder mehreren hydrolysierbaren Siliciumverbindungen in Anwesenheit des linearen anorganischen Polymers hydrolysiert und kondensiert werden, und/oder
b) zur Herstellung der Beschichtungszusammensetzung für die Deckschicht die eine oder mehreren hydrolysierbaren Siliciumverbindungen oder ein Teil davon in Anwesenheit der mindestens einen Alkalimetallverbindung hydrolysiert und kondensiert werden.

9. Verfahren nach einem der Ansprüche 1 bis 8, **dadurch gekennzeichnet, dass** in der Beschichtungszusammensetzung für die Grundschicht Teilchen, bevorzugt nanoskalige SiO₂-Teilchen, enthalten sind.

10. Verfahren nach einem der Ansprüche 1 bis 9, **dadurch gekennzeichnet, dass** die Beschichtungszusammensetzung für die Grundschicht und/oder für die Deckschicht zusätzlich Farbpigmente umfasst

11. Verfahren nach einem der Ansprüche 1 bis 10, **dadurch gekennzeichnet, dass** für das Hydrolysat oder Kondensat der Beschichtungszusammensetzung der Grundschicht und/oder der Deckschicht außer hydrolysierbaren Siliciumverbindungen keine anderen hydrolysierbaren Verbindungen eingesetzt werden.

12. Verfahren nach einem der Ansprüche 1 bis 11, **dadurch gekennzeichnet, dass** das Substrat ein Leichtmetall ist, das gegebenenfalls oberflächenbehandelt ist oder mit einer Oxidschicht des Leichtmetalls überzogen ist

13. Verfahren nach einem der Ansprüche 1 bis 12, **dadurch gekennzeichnet, dass** zur Herstellung der Beschichtungszusammensetzung für die Grundschicht und/ oder zur Herstellung der Beschichtungszusammensetzung für die Deckschicht und insbesondere zur Herstellung und insbesondere zur Herstellung des Hydrolysats oder Kondensats eine Metall- oder Borverbindung oder ein Metall- oder Borsalz von B, Al, Ge, Sn, Y, Ce, Ti, Zr, Fe, Co, Ni, Cu, Zn, Nb oder Ta zugegeben wird

14. Substrat mit einer Schutzschicht aus einer Grundschicht und einer Deckschicht, das a) eine verdichtete Beschichtungszusammensetzung, umfassend eine Bindemittelkomponente aus einem Hydrolysat oder Kondensat von einer oder mehreren hydrolysierbaren Siliciumverbindungen, wobei mindestens eine hydrolysierbare Siliciumverbindung mindestens eine nicht hydrolysierbare organische Gruppe aufweist, und eine Flexibilisierungskomponente aus einem linearen anorganischen Polymer, auf einem Substrat als Grundschicht und b) eine verdichtete Beschichtungszusammensetzung, die mindestens eine basische Alkalimetallverbindung und ein Hydrolysat oder Kondensat von einer oder mehreren hydrolysierbaren Siliciumverbindungen, wobei mindestens eine hydrolysierbare Siliciumverbindung mindestens eine nicht hydrolysierbare organische Gruppe aufweist, auf der Grundschicht als Deckschicht umfasst.

15. Substrat nach Anspruch 14, erhältlich nach einem Verfahren der Ansprüche 1 bis 12.

16. Substrat nach Anspruch 14 oder 15, **dadurch gekennzeichnet, dass** das Substrat ausgewählt ist aus Aluminium, Aluminiumlegierungen, Aluminium-Magnesium, Magnesium und Magnesiumlegierungen.

17. Verwendung eines Substrats nach einem der Ansprüche 14 bis 16 für einen Haushaltsgegenstand, ein Haushaltsgerät, einen Chemikalienbehälter, einen Reaktor, ein Leitungsrohr, Gegenstände im Außenbereich, z. B. Türen, Fenster oder Fassadenplatten, oder korrosiv belastete Gegenstände aus Aluminium, Aluminiumlegierungen, Aluminium-Magnesium, Magnesium oder Magnesiumlegierungen

## Claims

1. A process for preparing a protective layer of a base layer and a top layer on a substrate, wherein
a) a coating composition comprising a binder component of a hydrolysate or condensate of one or more hydrolysable silicon compounds, wherein at least one hydrolysable silicon compound has at least one non-hydrolysable organic group, and a flexibilizing component of at least one linear inorganic polymer, is wet-chemically applied to the substrate and densified to form the base layer, and
b) a coating composition comprising at least one basic alkali metal compound and a hydrolysate or condensate of one or more hydrolysable silicon compounds, wherein at least one hydrolysable silicon compound has at least one non-hydrolysable organic group, is wet-chemically applied to the base layer and densified to form the top layer.

2. The process according to claim 1, **characterized in that** the coating composition for the top layer comprises at least one basic alkali metal compound selected from a potassium, rubidium or cesium compound.

3. The process according to claim 1 or claim 2, **characterized in that** the applied coating composition for the base layer and/or the applied coating composition for the top layer are thermally densified to form the base layer and/or the top layer, the respective densification temperature being lower than the glass transition temperature of the layer to be densified.

4. The process according to one of claims 1 to 3, **characterized in that** the linear inorganic polymer is a linear polysiloxane, preferably a polydialkylsiloxane.

5. The process according to one of claims 1 to 4, **characterized in that** the hydrolysable silicon compound with at least one non-hydrolysable organic group for the coating composition of the base layer is a monoalkylsilane and/or the hydrolysable silicon compound with at least one non-hydrolysable organic group for the coating composition of the top layer is a monoalkylsilane.

6. The process according to one of claims 1 to 5, **characterized in that** at least one hydrolysable silicon compound having at least one non-hydrolysable organic group and at least one hydrolysable silicon compound without a non-hydrolysable group are used for the hydrolysate or condensate of the coating composition of the base layer and/or the top layer.

7. The process according to one of claims 1 to 6, **characterized in that** the coating composition for the top layer comprises at least two basic alkali metal compounds.

8. The process according to one of claims 1 to 7, **characterized in that**
a) for the preparation of the coating composition for the base layer the one or more hydrolysable silicon compounds are hydrolysed and condensed in the presence of the linear inorganic polymer, and/or
b) for the preparation of the coating composition for the top layer the one or more hydrolysable silicon compounds or a part thereof are hydrolysed and condensed in the presence of the at least one alkali metal compound.

9. The process according to one of claims 1 to 8, **characterized in that** particles, preferably nanoscale SiO₂ particles, are contained in the coating composition for the base layer.

10. The process according to one of claims 1 to 9, **characterized in that** the coating composition for the base layer and/or for the top layer additionally comprises colour pigments.

11. The process according to one of claims 1 to 10, **characterized in that** apart from hydrolysable silicon compounds no other hydrolysable compounds are used for the hydrolysate or condensate of the coating composition of the base layer and/or of the top layer.

12. The process according to one of claims 1 to 11, **characterized in that** the substrate is a light metal which is optionally surface-treated or coated with an oxide layer of the light metal.

13. The process according to one of claims 1 to 12, **characterized in that** for the preparation of the coating composition for the base layer and/or for the preparation of the coating composition for the top layer and in particular for the preparation of the hydrolysate or condensate a metal or boron compound or a metal or boron salt of B, Al, Ge, Sn, Y, Ce, Ti, Zr, Fe, Co, Ni, Cu, Zn, Nb or Ta is used.

14. A substrate with a protective layer of a base layer and a top layer comprising
a) a densified coating composition comprising a binder component of a hydrolysate or condensate of one or more hydrolysable silicon compounds wherein at least one hydrolysable silicon compound has at least one non-hydrolysable organic group, and a flexibilizing component of a linear inorganic polymer, on a substrate as a base layer, and b) a densified coating composition comprising at least one basic alkali metal compound and a hydrolysate or condensate of one or more hydrolysable silicon compounds, wherein at least one hydrolysable silicon compound has at least one non-hydrolysable organic group, on the base layer as top layer.

15. The substrate according to claim 14, obtainable according to a process of claims 1 to 12.

16. The substrate according to claim 14 or 15, **characterized in that** the substrate is selected from aluminum, aluminum alloys, aluminum-magnesium, magnesium and magnesium alloys.

17. Use of a substrate according to one of claims 14 to 16 for a household article, a household appliance, a chemical container, a reactor, a conduit pipe, objects in the exterior, e.g. doors, windows or façade panels, or corrosively loaded materials made of aluminum, aluminum alloys, aluminum-magnesium, magnesium or magnesium alloys.

## Revendications

1. Procédé de fabrication d'une couche protectrice constituée d'une couche de base et d'une couche de recouvrement sur un substrat, selon lequel :
a) une composition de revêtement, comprenant un composant liant constitué d'un hydrolysat ou condensat d'un ou de plusieurs composés de silicium hydrolysables, dans laquelle au moins un composé de silicium hydrolysable présente au moins un groupe organique non hydrolysable, et un composant de flexibilisation constitué d'au moins un polymère inorganique linéaire, est déposée chimiquement par voie humide sur le substrat et compressée afin de former la couche de base, et
b) une composition de revêtement, qui comprend au moins un composé basique de métal alcalin et un hydrolysat ou condensat d'un ou de plusieurs composés de silicium hydrolysables, dans laquelle au moins un composé de silicium hydrolysable présente au moins un groupe organique non hydrolysable, est déposée chimiquement par voie humide sur le substrat et compressée afin de former la couche de recouvrement.

2. Procédé selon la revendication 1, **caractérisé en ce que** la composition de revêtement destinée à la couche de recouvrement comprend un composé basique de métal alcalin choisi parmi un composé de potassium, de rubidium ou de césium.

3. Procédé selon la revendication 1 ou la revendication 2, **caractérisé en ce que** la composition de revêtement appliquée destinée à la couche de base et/ou la composition de revêtement appliquée destinée à la couche de recouvrement sont thermocompressées afin de former la couche de base et/ou la couche de recouvrement, dans lequel la température de compression respective est inférieure à la température de transition vitreuse de la couche à compresser.

4. Procédé selon l'une des revendications 1 à 3, **caractérisé en ce que** le polymère inorganique linéaire est un polysiloxane linéaire, de préférence un polydialkylsiloxane.

5. Procédé selon l'une des revendications 1 à 4, **caractérisé en ce que** le composé de silicium hydrolysable comprenant au moins un groupe organique non hydrolysable pour la composition de revêtement de la couche de base est un monoalkylsilane et/ou le composé de silicium hydrolysable comprenant au moins un groupe organique non hydrolysable pour la composition de revêtement de la couche de recouvrement est un monoalkylsilane.

6. Procédé selon l'une des revendications 1 à 5, **caractérisé en ce qu'**au moins un composé de silicium hydrolysable comprenant au moins un groupe organique non hydrolysable et au moins un composé de silicium hydrolysable dépourvu de groupe non hydrolysable sont utilisés pour l'hydrolysat ou le condensat de la composition de revêtement de la couche de base et/ou de la couche de recouvrement.

7. Procédé selon l'une des revendications 1 à 6, **caractérisé en ce que** la composition de revêtement destinée à la couche de recouvrement comprend au moins deux composés basiques de métal alcalin.

8. Procédé selon l'une des revendications 1 à 7, **caractérisé en ce que** :
a) les un ou plusieurs composés de silicium hydrolysables sont hydrolysés et condensés en présence du polymère inorganique linéaire pour la fabrication de la composition de revêtement destinée à la couche de base, et/ou
b) les un ou plusieurs composés de silicium hydrolysables ou une partie de ceux-ci sont hydrolysés et condensés en présence dudit au moins un composé de métal alcalin pour la fabrication de la composition de revêtement destinée à la couche de recouvrement.

9. Procédé selon l'une des revendications 1 à 8, **caractérisé en ce que** des particules, de préférence des nanoparticules de SiO₂, sont présentes dans la composition de revêtement destinée à la couche de base.

10. Procédé selon l'une des revendications 1 à 9, **caractérisé en ce que** la composition de revêtement destinée à la couche de base et/ou à la couche de recouvrement comprend, en plus, des pigments colorés.

11. Procédé selon l'une des revendications 1 à 10, **caractérisé en ce qu'**aucun autre composé hydrolysable n'est mis en oeuvre hormis les composés de silicium hydrolysables pour l'hydrolysat ou le condensat de la composition de revêtement de la couche de base et/ou de la couche de recouvrement.

12. Procédé selon l'une des revendications 1 à 11, **caractérisé en ce que** le substrat est un métal léger, qui est éventuellement traité en surface ou revêtu d'une couche d'oxyde de métal léger.

13. Procédé selon l'une des revendications 1 à 12, **caractérisé en ce qu'**un composé de métal ou de bore ou un sel de métal ou de bore de B, Al, Ge, Sn, Y, Ce, Ti, Zr, Fe, Co, Ni, Cu, Zn, Nb ou Ta est ajouté pour la fabrication de la couche de revêtement destinée à la couche de base et/ou pour la fabrication de la couche de revêtement destinée à la couche de recouvrement et notamment pour la fabrication de l'hydrolysat ou du condensat.

14. Substrat pourvu d'une couche protectrice constituée d'une couche de base et d'une couche de recouvrement, qui comprend a) une composition de revêtement compressée, comprenant un composant liant constitué d'un hydrolysat ou condensat d'un ou de plusieurs composés de silicium hydrolysables, dans laquelle au moins un composé de silicium hydrolysable présente au moins un groupe organique non hydrolysable, et un composant de flexibilisation constitué d'un polymère inorganique linéaire, sur un substrat en tant que couche de base, et b) une composition de revêtement compressée, qui comprend au moins un composé basique de métal alcalin et un hydrolysat ou condensat d'un ou de plusieurs composés de silicium hydrolysables, dans laquelle au moins un composé de silicium hydrolysable présente au moins un groupe organique non hydrolysable, sur la couche de base en tant que couche de recouvrement.

15. Substrat selon la revendication 14, pouvant être obtenu d'après un procédé selon les revendications 1 à 12.

16. Substrat selon la revendication 14 ou 15, le substrat étant **caractérisé en ce qu'**il est choisi parmi l'aluminium, les alliages d'aluminium, le magnésium-aluminium, le magnésium et les alliages de magnésium.

17. Utilisation d'un substrat selon l'une des revendications 14 à 16 pour un article ménager, un ustensile ménager, un récipient de produits chimiques, un réacteur, un tube de conduite, des objets situés en extérieur, par exemple des portes, des fenêtres ou des panneaux de façade, ou des objets en aluminium, alliages d'aluminium, magnésium-aluminium, magnésium ou alliages de magnésium attaqués par la corrosion.
